# EUROPEAN PATENT APPLICATION

(11) **EP 2 359 937 A2**
(43) Date of publication of application: **24.08.2011**
(21) Application number: 11152351.0
(22) Date of filing: 27.01.2011
(51) Int. Cl.: B03B 5/62, G01N 1/28

(54) **Device and method for disgregating samples of water depth sediments**

(30) Priority: 29.01.2010 IT PD20100019
(71) Applicant: Istituto Nazionale di Oceanografia e di Geofisica Sperimentale - OGS, 34010 Sgonico (Trieste) (IT)
(72) Inventor: Cociancich, Edvino, 34100 Trieste (IT)
(74) Representative: Pavan, Andrea

(57) **Abstract**

A disgregating device (100) for samples of water depth sediment comprises: a funnel-shaped container (1) with a longitudinal axis (X-X), a base region (11) with cross-sectional, relatively smaller areas and a summit region (12) with cross-sectional, relatively larger areas, the container (1) being able to house a sediment sample; first fluid feeding means (15, 21, 23) to produce inside the container (1) at least a first fluid jet (G1) having a respective propagation direction substantially parallel to said longitudinal axis (X-X) and oriented from the base region (11) to the summit region (12) of the container (1); second fluid feeding means (16, 22, 25a-c) to produce inside the container (1) at least a second fluid jet (G2) having a respective propagation direction with at least one component substantially parallel to the longitudinal axis (X-X) and oriented from the summit region (12) to the base region (11) of the container. The second fluid feeding means (16, 22, 25a-c) are designed and/or associated to the container (1) so that said at least one component substantially parallel to the longitudinal axis (X-X) of the at least a second fluid jet (G2), is transversally offset with respect to the propagation direction of the at least a first fluid jet (G1).

A method for disgregating samples of water depth sediment which may be implemented by means of the aforesaid disgregating device (100) and a unit for treating samples of water depth sediment comprising such a disgregating device (100) are also described.

## Description

### Field of the invention

The main aspects of the present invention relate to a disgregating device for samples of water depth sediment and to a disgregating method which may be implemented by such device.

A further aspect of the invention relates to a unit for treating the samples of water depth sediment, comprising the aforesaid disgregating device.

### State of the art

In the field of water ecosystem monitoring and studying, in particular marine and transition ecosystems, the study of organisms, indicated as a whole with the term "benthos", which live in or in close contact with soft water depths, is an important instrument for investigating local environmental features. Indeed, the state of benthic communities reflects the state of the sedimentary environment in which they live under undisturbed or natural conditions, or under conditions of antrophic disturbance. Benthos larger than 0.5 mm, indicated as a whole as "macrobenthos" are typically taken into consideration for this type of investigation.

In order to determine benthos taxonomy and to study them, samples of water depth sediment under examination should be taken, and then these samples should be treated to separate the benthos of concern.

Water depth sediment samples are normally taken from boats using appropriate devices, such as buckets, box corer, corers, etc. For the aforesaid investigation purposes, rather large samples are collected, the volumes of which may reach up to even 10-15 liters.

In order to separate the organisms of concern, the subsequent treatment of a collected sample typically comprises two steps:
- a step of disgregating, in which the sample is diluted with the addition of a fluid, normally water, and remixed with a more or less direct intervention thereon to eliminate clots of sediment;
- a step of screening of the disgregated sample, in which the organisms of concern are completely separated, according to dimensional criteria, from the rest of the sediment and collected for subsequent studying and storage.

According to a known method, the step of disgregating is carried out by pouring the collected sample into a container with the addition of a predetermined volume of water and mixing the sample thus diluted with a suitable instrument to obtain a substantial disgregating of the clots of sediment present herein. During the subsequent step of screening, the disgregated sample is poured into a screen with mesh of approximate size chosen according to the benthos to be separated, and thus washed with a jet of water. This operation determines the substantial complete separation of the organisms of concern, which are withheld by the screen from the rest of the sediment.

A drawback of this known method is that the steps above are performed manually. This causes a considerable waste of energy and time for separating and introduces the manual ability and experience of the operator as a defining factor for the result quality.

A further drawback is that the mixing of the sample in the container and the subsequent washing in the screen may determine the damage of the benthos due to shocks or excessive pressure against the solid surfaces of the container or of the screen or by getting caught in the screen mesh, and thus compromise their subsequent determination. Also from this point of view, the manual ability and experience of the operator are fundamental.

MEKU Erich Pollähne GmbH sells a disgregating device for separating nematodes from water depth sediment sample under the name "Oostebrink-Elutriator". This device comprises a funnel-shaped container and, at the open summit end thereof, a loading chamber provided with a screen for housing the sample to be treated. Water feeding means are present over the screen by means of which a jet of water directed along the longitudinal axis of the device and oriented downwards may be generated on the screen. Such a water jet washes the sample placed in the screen and carries the smaller size fraction of the sample, including the nematodes to be separated, into the container below. Further water feeding means are present at the base of the container, by means of which another water jet may be generated in the container, also directed along the longitudinal axis of the device but oriented upwards. Such a water jet is used to maintain the nematodes and the lighter sediment particles which reach the loading chamber after washing in suspension within the container, leaving instead the heavier particles to be deposited on the bottom of the container. When the container is nearly full, the water is dumped manually by opening a tap into a dump pipe at the base of the main body. During dumping, the nematodes are withheld by means of a specific screen.

Although this disgregating device allows to treat a sample of water depth sediment for separating organisms of concern without direct manual intervention by an operator on the sample itself it still has drawbacks and limitations.

Firstly, the washing of the sample with water jet located on the screen in the loading chamber exposes the organisms to the separated to the risk of damage caused by shocks or excessive pressure against the solid surfaces of the screen or of getting caught in the screen mesh in manner similar to that which may occur during the step of screening in the manual method described further above. Secondly, the described disgregating device is designed to treat a restricted type of samples having small volume (100-500 ml) and substantially controlled composition and is not suitable for the treating larger volume samples (up to 10-15 liters) and/or of uncontrolled composition (e.g. due to the presence of pebbles, small fish or foreign elements), such as those typically collected in seas for the study of benthos organisms in environmental condition monitoring campaigns.

### Summary of the invention

The underlying technical problem of the present invention consists in making available a disgregating device and a method for disgregating samples of water depth sediment containing benthos to be separated for subsequent determination and analysis, by means of which it is possible to avoid or substantially limit the risk of damage to the organism during the disgregating of the sample caused by shocks and excessive pressure against solid surfaces and/or getting caught in screen meshes. Furthermore, the aforesaid device and method should allow to effectively treat a wide range of samples in terms of volume and composition. According to the invention, the aforesaid technical problem is solved by means of a disgregating device for samples of sediments of water depths having the features set forth in independent claim 1 and by means of a method for disgregating samples of sediment of water depths comprising the steps illustrated in independent claim 9.

In particular, in first aspect of the invention relates to a disgregating device for samples of water depth sediment comprising:
- a funnel-shaped container with a longitudinal axis, a base region with cross-sectional, relatively smaller areas and a summit region with cross-sectional, relatively larger areas, said container being able to house a sediment sample;
- first fluid feeding means adapted to produce inside said container at least one first fluid jet having a respective propagation direction substantially parallel to said longitudinal axis and oriented from said base region to said summit region of the container;
- second fluid feeding means adapted to produce inside said container at least one second fluid jet having a respective propagation direction with at least one component substantially parallel to said longitudinal axis and oriented from said summit region to said base region of the container,
   characterized in that said second fluid feeding means are designed and/or associated to said container so that said at least one component, substantially parallel to said longitudinal axis of the at least a second fluid jet, is transversally offset with respect to the propagation direction of the at least a first fluid jet.

In the scope of the present invention and of the subsequent claims, it is understood that the direction of propagation of a fluid jet is determined in the immediately proximity of the respective emission point, and in all cases within a distance from the emission point at which a appreciable scattering of the jet starts to appear.

With the disgregating device of the invention it is possible to treat samples of substantially generic, uncontrolled composition, ensuring an effective separation while at the same time protecting the organisms to be separated. Indeed, advantageously, the interaction of the at least two jets of fluid having the described features allows to obtain in the container a fluid recirculation with disgregating effect, in which the risk of shocks or excessive pressure of the organisms against the solid surfaces of the device is avoided or in all cases greatly reduced. In particular, in the disgregating device of the invention, situations in which a fluid jet acts on the sample pushing it directly against the solid surfaces or the screen mesh are completely avoided. The recirculation of fluid may be extended substantially at will to obtain the complete desegregation of the sample. Furthermore, together with the desegregation of the sample, in the disgregating device according to the invention a separation of the relatively lighter fraction from the relatively heavier faction is advantageous performed by means of the combined action of the fluid jets and gravity. Indeed, the lighter fraction of the sample containing the organisms to be separated, which is gradually released as the disgregating proceeds, tends to go towards the summit region of the device, where it may be appropriately collected, while the heavier faction, containing clots of sediment not yet disgregated and any foreign bodies, tends to go back towards the bottom of the container.

A second aspect of the invention relates to a method for disgregating samples of water depth sediment comprising the steps of:
- putting a sediment sample in a funnel-shaped container with a longitudinal axis, a base region with cross-sectional, relatively smaller areas and a summit region with cross-sectional, relatively larger areas;
- generating inside said container at least one first fluid jet having a respective propagation direction substantially parallel to said longitudinal axis and oriented from said base region to said summit region of the container;
- at least partially simultaneously to the generating step of said at least a first fluid jet, generating inside said container at least a second fluid jet having a respective propagation direction with at least one component substantially parallel to said longitudinal axis and oriented from said summit region to said base region of the container,
   characterized in that said at least a second fluid jet is generated so that said at least one component, substantially parallel to the longitudinal axis, is transversally offset with respect to the propagation direction of the at least a first fluid jet.

Similarly as described above, with reference to the first aspect of the invention, this disgregating method allows to advantageously and effectively treat samples of various nature in terms of volume and/or composition ensuring a high level of integrity of the organisms to be separated.

A third aspect of the invention concerns a unit for treating samples water depth sediments comprising at least one disgregating device with the features described above and at least one screen device in cascade fluid-communicating connection with the disgregating device.

By means of such a unit it is possible to implement the entire treatment, i.e. the disgregating and the subsequent screening of a sample, in integrated manner without the need for a direct intervention on the sample by an operator and with the advantages in terms of safeguard the organisms to be separated and treatment capacity of samples of various nature described above with reference to the device and to the method of the invention.

### Brief description of the drawings

Further features and advantages of the present invention will be more apparent in the description of the following preferred embodiment, by way of indicative, non-limitative example, with reference to the appended drawings, in which:
- Fig. 1 is a perspective diagrammatic view of a disgregating device made according to the present invention;
- Fig. 2 is a diagrammatic longitudinal section view of the disgregating device in Fig. 1;
- Fig. 3 shows two details on enlarged scale of the view in Fig. 2;
- Fig. 4 is a diagrammatic perspective view with parts partially removed of a detail of the disgregating device in Fig. 1, and
- Fig. 5 is a diagrammatic perspective view of a unit for treating samples of water depth sediments comprising the disgregating device in Fig. 1.

### Detailed description of a preferred embodiment of the invention

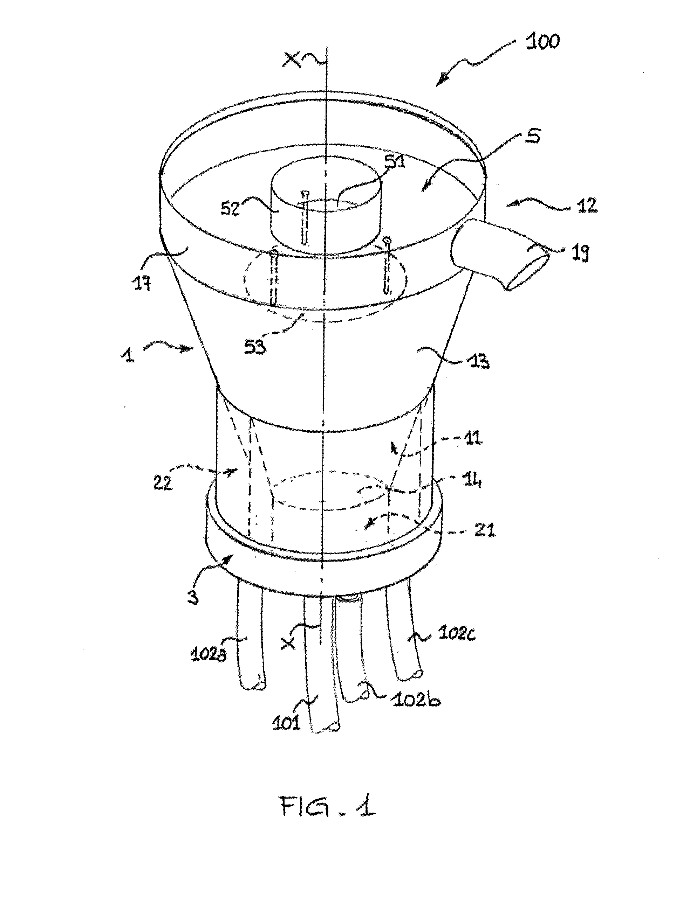

Fig. 1-4 diagrammatically show a preferred embodiment of a disgregating device, indicated as a whole by reference numeral 100, in accordance with the invention, for disgregating samples of sediment taken from water depths.

The disgregating device 100 comprises a funnel-shaped container 1 adapted to house a sample of sediment to be disgregated (not shown in the figures for the sake of clarity). The container 1 has a longitudinal axis X-X and comprises a base region 11 with cross-sectional, relatively smaller areas and a summit region 12 with cross-sectional, relatively larger areas. The container 1 is delimited by a side wall 13, preferably formed by a truncated cone or truncated pyramid shaped surface, and a bottom wall 14, which inferiorly closes the base region 11, while the summit region 12 is superiorly open to allow the loading of samples and may be closed during operation of the device by means of a lid or other element adapted to carry out such a function, as described more in detail below.

The container 1 is dimensioned with a volume preferably from four to five times larger than the maximum volume provided for the samples to be treated in order to ensure the housing of the amount of fluid needed for disgregating.

Since the fluid used for disgregating is typically water from the same basin from which bed the sample was taken, in particular often sea water, the container 1 is preferably made of material with good salt corrosion resistance. A particularly preferred material from this point of view, and additionally for its strength and machinability, is PVC. Alternatively to PVC, or in combination thereof, Plexiglas may be used in given parts of container 1, which although has lower strength and machinability properties than PVC, advantageously allows a direct visual control of the disgregating process by virtue of its transparency.

The disgregating device 100 further comprises first and second fluid feeding means.

The first fluid feeding means are adapted to generate inside container 1 at least one first fluid jet G1 having a respective propagation direction substantially parallel to the longitudinal axis X-X and oriented from the base region 11 towards the summit region 12.

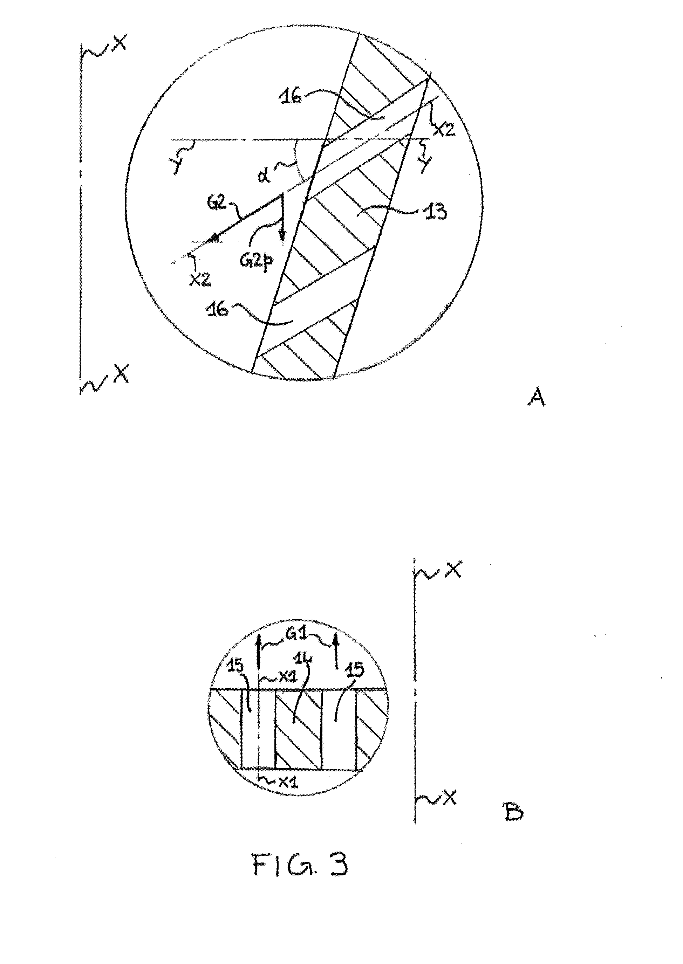

The second fluid feeding means are adapted to produce inside container 1 at least one second fluid jet G2 having a respective propagation direction with at least one component, shown for the sake of clarity only in detail A in Fig. 3 with reference G2p, substantially parallel to the longitudinal axis X-X and oriented from the summit region 12 toward the base region 11.

According to the invention, the second fluid feeding means are configured and/or associated to container 1 so that the at least one component G2p, substantially parallel to the longitudinal axis X-X of the at least one second fluid jet G2 is transversally offset with respect to the propagation direction of the at least one first fluid jet G1.

The combined action of the two fluid jets G1 and G2 at least in part parallel and opposed to the longitudinal direction of container 1, but transversally offset, allows to obtain a fluid recirculation within container 1 which ensures an effective disgregating of the sample but respects the integrity of the organisms being separated. In particular, as better described also hereinafter with reference to the method of the invention, during such recirculation the lighter fraction of the sample comprising the organisms to be separated tends to go towards the summit region of 12 of container 1, while the heavier fraction tends to go back towards the base region 11 and deposited on the bottom wall 14, in this also facilitated by the funnel shape of container 1.

In order to obtain a more uniform, effective disgregating action, the first fluid feeding means are preferably adapted to generate in container 1 a plurality of first fluid jets G1.

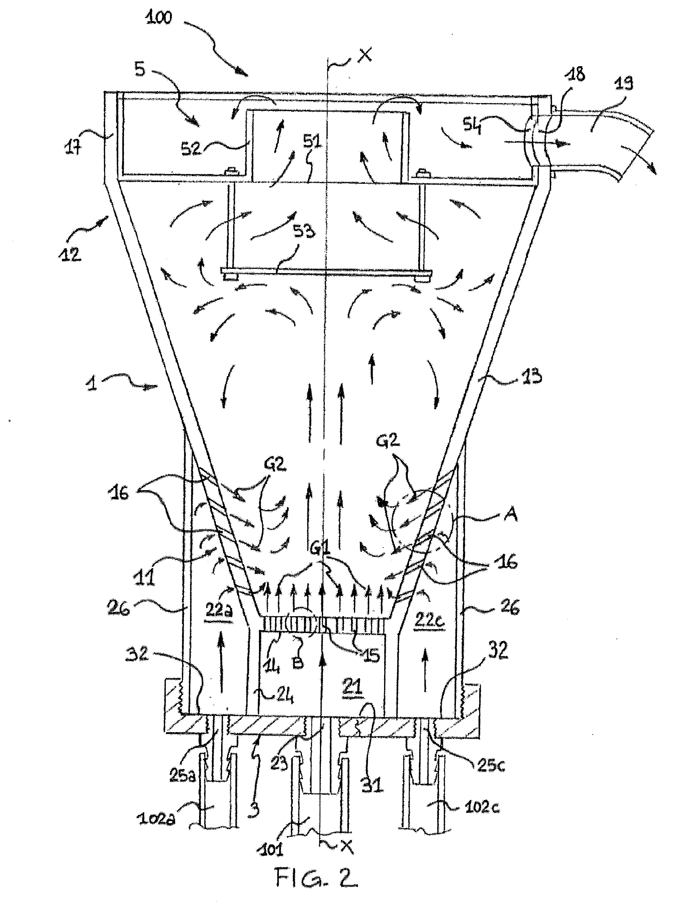

As shown in particular in Fig. 2-4, in the preferred embodiment of the invention illustrated herein, the first fluid feeding means comprise a plurality of holes 15 obtained in the bottom wall 14 of container 1, each hole of said plurality of holes 15 having a respective axis X1-X1 (see Fig. 3-B) parallel to the longitudinal axis X-X of container 1, and a first distribution chamber 21 externally facing the bottom wall 14 and comprising at least one opening 23 for the connection of a respective fluid feeding duct 101.

The plurality of holes 15 allows to advantageously generate a plurality of first fluid jets G1, which determine a distributed fluid emission at the bottom wall 14 of container 1 acting on the sample to be disgregated from underneath. Furthermore, with the described assembly and in particular with the use of a distribution chamber, it is advantageously possible to generate the aforesaid plurality of first fluid jets G1 maintaining a single fluid feeding through the opening 23.

Preferably, the distribution chamber 21 is limited by the bottom wall 13 of container 1, by an opposed wall 31 and by a perimetral wall 24 extending between the bottom wall 13 and the opposed wall 31, and the at least one opening 23 for connecting a respective fluid feeding duct 101 is formed in the opposed wall 31. Thereby, it is possible to advantageously exploit the pressure force of the fluid fed by means of the feeding duct 101 in optimal manner, since it may be fed into the distribution chamber 21 directly in front of the holes 15 in the bottom wall 14 and in a direction substantially parallel to axis X1-X1 thereof.

Preferably, also the second fluid feeding means are adapted to generate a plurality of second fluid jets G2 inside container 1.

As shown in particular in Fig. 2-4, in the preferred embodiment of the invention illustrated herein, the second fluid feeding means comprise a plurality of holes 16 formed in the side wall 13 of container 1, each hole of said plurality of holes 16 having a respective axis X2-X2 inclined by an angle α < 0 parallel to the transversal axis Y-Y of container 1 (see Fig. 3-A), and a second distribution chamber 22 externally facing the side wall 13 and comprising at least one opening for connecting a respective fluid feeding duct.

Similarly to that described above for the first fluid feeding means, the plurality of holes 16 advantageously allows to generate a respective plurality of second fluid jets G2 which determine an emission of distributed fluid at the bottom wall 13 of container 1 while the use of a distribution chamber 22 advantageously allows to generate the aforesaid plurality of second fluid jets G2 maintaining a single fluid feeding.

The specific inclination of the holes 16 allows to address the respective fluid jets G2 towards the bottom wall 14, so that they contribute to making the parts of sample not yet disgregated go back to the base region 11, also favored by the inclination of the side wall 13, which parts due to their weight are separated from the main flow determined by the first fluid jets G1 oriented towards the summit region 12.

The inclination angle α, may be the same for all holes 16 or may vary, for example, according to their distance on the bottom wall 14. In a preferred embodiment (not shown) it may for example contemplated that the holes 16 most distant from the bottom wall 14 have an absolute higher inclination angle α, value, while the holes 16 closest to the bottom wall have an absolute smaller inclination angle α, value.

In the preferred embodiment illustrated herein the holes 16 are distributed along the entire perimeter from the side wall 13 to a predetermined height, preferably equal to at least 1/3 of the total height of container 1, starting from the bottom wall 14.

In this preferred embodiment, the second distribution chamber 22 extends annularly about container 1 for a length of its height equal at least to the height to which the presence of hole 16 extends.

In order to ensure a feeding of fluid as uniform as possible along the perimeter of the container, preferably the second distribution chamber 22 is further angularly divided by a plurality of sectors and in each sector an opening for the connection of a respective fluid feeding duct is present. In particular, in the preferred embodiment herein illustrated, three sectors 22a-c are provided with respective three openings 25a-c for the connection of respective three fluid feeding ducts 102a-c. Preferably, the sectors 22a-c have the same width and the openings 25a-c are correspondingly equally spaced along the perimetral direction of the distribution chamber 22. In particular, with a circular symmetry geometric configuration of the disgregating device 100 as that shown, each sector 22a-c has an angular extension equal to 120° and the openings 25a-c are correspondingly angularly spaced by 120°.

Preferably, the second distribution chamber 22, possibly divided into sectors, is delimited by the side wall 13 of container 1, from a wall 32 opposed to that in the direction of the longitudinal axis X-X and by at least one perimetral wall 26 extended between the side wall 13 of container 1 and the opposed wall 32, and the at least one opening (in particular herein between the three openings 25a-c) for the connection of a respective fluid feeding pipe (in particular herein the three ducts 102a-c) is formed in the opposed wall 32. This arrangement allows to advantageously simplify the construction of two distribution chambers 21 and 22 rationalize the connection of the fluid feeding ducts 101 and 102a-c.

In this perspective, indeed, the second distribution chamber 22 is extended beyond the bottom wall 14 of container 1 and preferably extends annularly also about the first distribution chamber 21. Thereby, it is advantageously possible to close the two distribution chambers 21 and 22 at the opposed wall thereof of container 1 with a single closing element, shown in figure with reference numeral 3, where all the necessary connections of the fluid feeding ducts are concentrated. Consequently, particularly in the preferred embodiment here described, the above mentioned walls 31 and 32 of the distribution chambers 21 and 22, opposed to the bottom wall 14 and to the side wall 13 of container 1 respectively, are both defined by the closing element 3, where the respective openings 23 e 25a-c for the connection of fluid feeding ducts 101 and 102a-c are formed.

As shown in particular in Fig. 2, the closing element 3 is preferably removably associated to the distribution chambers 21 and 22, to allow access therein for inspection, cleaning etc. Fig. 2 shows by way of example a connection by means of threaded coupling at the external peripheral wall 26 of the distribution chamber 22. Naturally, any other type of known removable connection may be used, which ensures an adequate fluid-tightness and is compatible with the geometric shape of the disgregating device 100 i.e. of the distribution chambers 21 and 22. Preferably, the connection between the openings 23 and 25a-c and the respective fluid feeding ducts 101 and 102a-c is removable. As shown again in Fig. 2, in the illustrated embodiment, such a coupling is made, for example by the interposition of conventional flexible tube joining elements 103.

The perimetral wall 24 of the first distribution chamber 21, which in the preferred embodiment illustrated herein also defines the perimetral inner wall of the second distribution chamber 22, and the outer perimetral wall 26 of the second distribution chamber 22 are fixed to container 1 by means of gluing, welding or other suitable fastening method. Alternatively, they may be formed integrally in one piece together with container 1.

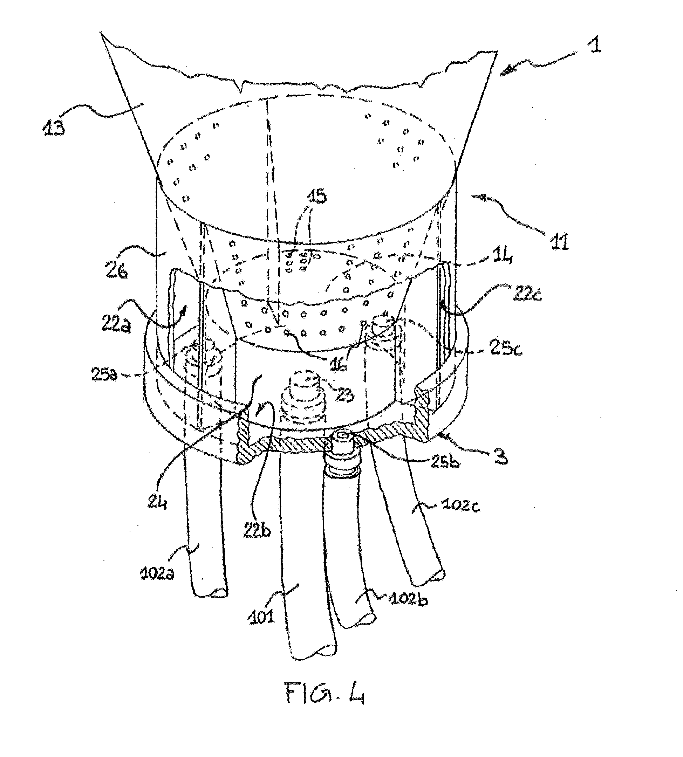

The disgregating device 100 further preferably comprises a collecting plate 5 associated to container 1 at the summit region 12 and fluid-communicating therewith, as shown in particular in Fig. 2 and 4. The collection plate 5 allows to advantageously collect, without the need of intervention by the operator, a relatively lighter fraction of the disgregated fraction, containing the organisms to be separated, which tend, as the disgregating proceeds to separate from the sample and migrate towards the summit region 12 by effect of the fluid jets G1.

In the preferred embodiment illustrated herein, the collection plate 5 is associated to container 1 in removable manner so as to close the latter superiorly as a lid. The collection plate 5 may also carry out the containment function while the device is on. In order to form the coupling between container 1 and collection plate 5, container 1 preferably comprises at the summit region 12, a straight portion 17, e.g. cylindrical or prismatic, which is joined to the main funnel-shaped body of container 1. The straight portion 17 defines a housing seat which may be inserted in the collection plate 5, thus obtaining a coupling which is at the same time stable and structurally simple.

The fluid communication with container 1 occurs by at least one opening 51 formed in the bottom wall of the plate 5. At the edge facing towards the collection zone, the opening 51 is preferably provided with a raised edge 52 for preventing the fluid, and the separated organisms therewith, to go back into container 1. Furthermore, at the side facing towards container 1, the opening 51 is preferably provided with a screening element 53, arranged at a given distance therefrom. The screening element 53 has the function of preventing the heavier factions not yet disgregated or foreign elements present in the sample may pass into the collection plate 5 by effect of the thrust of the fluid jets G1.

The collection plate 5 further comprises preferable at least one overflow opening 54 at the side wall thereof. The overflow opening 54 along with a corresponding opening 18 formed in the straight portion 17 of container 1, allows to dump the content of the collection plate 5 outside container 1 in autonomous, controlled manner. The opening 18 may be provided, at the outer side of container 1, with an appropriately shaped nozzle 19 to facilitate pouring to collection containers or other treatment units.

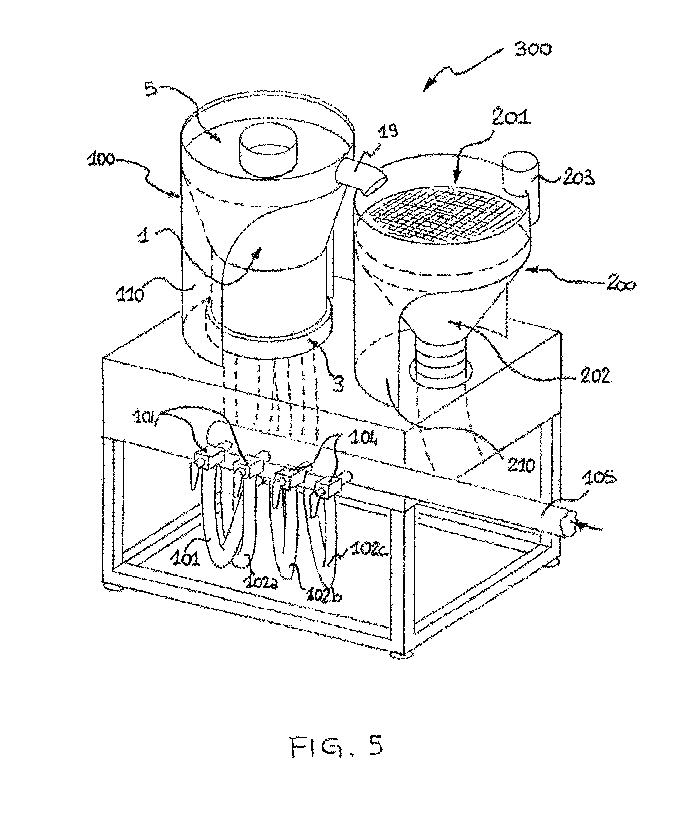

Fig. 5 shows a preferred use of the disgregating device 100 of the invention in a unit 300 for the treatment of samples of water depth sediments, by means of which the entire treatment of a sample may be implemented in integrated manner, to the complete separation of the organisms of concern without direct intervention on the sample by an operator.

A unit 300 comprises at least one disgregating device 100 and at least one screening device 200 in cascade fluid-communicating connection with the at least one disgregating device 100. The fluid communication is obtained preferably by means of the opening of an overflow opening 54 in the collection plate 5 and the corresponding opening 18 of container 1 described above in the disgregating device 100.

The screening device 300 preferably comprises at least one screen 201 with mesh of dimension chosen so as to withhold only the organisms of concern and let through other smaller organisms and/or sediments still present which are collected in a dump 202 below, which screen 201 is preferably associated in removable manner.

At the end of the method, the organisms collected in the screen 201 are taken and subjected to the usually fixing treatments, possibly after anesthetization for preservation and subsequent study. In order to avoid as much as possible also in this operation a direct contact with the separated organisms, the screen 201 is preferably provided with a transfer element 203 adapted to allow to transfer the organisms collected in the screen 201 into a suitable collection container, e.g. a mesh bag, without needing to operated with external tools thereon. In the example shown in Fig. 5 the transfer element is made as a tubular element associated to the screen 201 at the edge thereof and having an inlet opening facing the upper side of the screen and an outlet opening which may be connected to the collection container. In order to collect, the screen 201 is removed from the screening device 200 and arranged inclined on one side so that the collected organisms are directed towards the inlet opening of the transfer element 203. The passage in the transfer element 203 may be easily facilitated with a backflow washing of the screen 201 with an appropriately calibrated shower fluid jet.

Fig. 5 also shows that the disgregating device 100 may be advantageously provided with an outer casing 110, which at least partially collects it for protective purposes and further facilitates the handling and the repositioning during transport and storage. A protecting casing 210 may similarly be provided for the screening device 200.

Fig. 5 again diagrammatically shows a delivery duct 105 of a feeding system (not shown) for feeding fluid to the disgregating device 100. The feeding ducts 101, 102a-c of the distribution chambers 21 and 22 are collected to the delivery duct 105 by means of regulation valves 104. If the disgregating device 100 i.e. the unit 300 are used aboard a boat, the feeding method will preferably comprise pumping means appropriately arranged or belonging to the onboard systems, to directly collect water from the basin in which it is floating.

With reference in particular to Fig. 2 a preferred embodiment of the method for disgregating samples of water depth sediment according to the invention will now be described.

During a first step of the method a sample of sediment is placed in the funnel-shaped container 1 of the disgregating device 100, introducing it at the summit region 12, possibly after having removed the collection plate 5. The sample is arranged freely in the lower part of container 1, particular in the base region 11, in contact with the bottom wall 14.

During a subsequent step, within container 1 is generated at least one first fluid jet G1 having a respective direction of propagation substantially parallel to the longitudinal axis X-X and oriented to the base region 11 towards the summit region 12 of container 1. At least one first fluid jet G1 acts on the sample pushing it towards the summit region 12 and performing a first disgregating action. Under the action of the at last one first fluid jet G1, the relatively lighter fraction of the sample which is gradually released, which also contains the organisms to be separated, tends to go towards the summit region 12 of container 1, while the relatively heavier fraction containing the clots of sediment not yet disgregated and possible foreign bodies, tends to fall back laterally towards the base region 11.

At least partially simultaneously to the generating step of the at least one first fluid jet G1, the method consists in generating inside container 1 at least a second fluid jet G2 having a respective propagation direction with at least one component G2p substantially parallel to the longitudinal axis X-X and oriented from the summit region 12 towards the base region 11 of container 1. The at least one second fluid jet G2 is generated so that the at least one component G2p, substantially parallel to the longitudinal axis, is transversally offset with respect the propagation direction of the at least a first fluid jet G1. The at least one second fluid jet G2 thus generated contributes to returning the fractions of the sample which are not yet completely disgregated towards the base region 11 where they return to the field of action of the at least one first fluid jet G1.

The interaction of the fluid jets G1 and G2 determines a fluid recirculation with disgregating effect in container 1 by means of which the lighter fractions, and in particular the organisms of concern, may be separated from the rest of the sample effectively and in manner which respects the organisms themselves.

The hydrodynamic parameters, in particular pressure and/or flow rate of the fluid jets G1 and G2 are preferably adjustable. Thereby, it is advantageously possible to adapt the operative conditions to the features (volume, composition, etc.) of the sample to be disgregated also as these conditions vary during the method, e.g. to speed up or make disgregating more effective. The steps of generating the at least one first fluid jet G1 and the at last one second fluid jet G2 may be protracted or repeated in time to obtain the complete disgregating of the sample and the separation of the organisms of concern.

Preferably the step of generating the at least one first fluid jet G1 comprises the generation of a plurality of the first fluid jets G1.

Preferably, the step of generating the at least one first fluid jet G2 comprises the generation of a plurality of the second fluid jets G2.

The first fluid jets G1 are preferably generated within container 1 formed in the bottom wall 14 forming a plurality of holes having a respective axis parallel to the longitudinal axis X-X of the container, and feeding these holes by means of a first distribution chamber, in which at least one feeding duct is connected as described above with reference to the disgregating device 100 of the invention.

The second fluid jets G2 are preferably generated within container 1 forming in the side wall 13 a plurality of holes 16 having a respective axis inclined by an angle α<0 with respect to a transversal axis of container 1, and feeding these holes by means of a second distribution chamber in which at least one feeding duct is connected again as described above with reference to the disgregating device 100 of the invention.

The method of the invention preferably also comprises a step of collecting the lighter fraction of the sample, comprising the organisms to be separated, which migrates towards the summit region 12 of container 1 as described above. Such a step of collecting is preferably implemented automatically without intervention by external operators, with the aid of suitable means, such as the collection plate 15 described above with reference to the disgregating device 100 of the invention.

A person skilled in the art may make changes and variations to the described-above disgregating device and method to meet specific, contingent application needs, which changes and variants fall in all cases within the scope of protection of the invention as defined by the appended claims.

## Claims

1. Disgregating device (100) for samples of sediment of water depths, comprising:
- a funnel-shaped container (1) with a longitudinal axis (X-X), a base region (11) with cross-sectional relatively smaller areas and a summit region (12) with cross-sectional relatively larger areas, said container (1) being able to house a sediment sample;
- first fluid feeding means (15, 21, 23) to produce inside said container (1) at least a first fluid jet (G1) having a respective propagation direction substantially parallel to said longitudinal axis (X-X) and oriented from said base region (11) to said summit region (12) of the container (1);
- second fluid feeding means (16, 22, 25a-c) to produce inside said container (1) at least a second fluid jet (G2) having a respective propagation direction with at least a component (G2p) substantially parallel to said longitudinal axis (X-X) and oriented from said summit region (12) to said base region (11) of the container, **characterized in that** said second fluid feeding means (16, 22, 25a-c) are designed and/or associated to said container (1) so that said at least one component (G2p), substantially parallel to said longitudinal axis (X-X) of the at least a second fluid jet (G2), is transversally offset with respect to the propagation direction of the at least a first fluid jet (G1).

2. Disgregating (100) device according to Claim 1, wherein said container (1) comprises a bottom wall (14) closing said base region (11), and said first fluid feeding means (15, 21, 23) comprise:
- a plurality of holes (15) formed in said bottom wall (14), each hole of said plurality of holes (15) having a respective axis (X1 -X1) parallel to the longitudinal axis (X-X) of said container (1);
- a first distribution chamber (21) externally facing said bottom wall (14) and comprising at least an opening (23) for connecting a respective fluid feeding duct (101).

3. Disgregating device (100) according to Claim 2, wherein said first distribution chamber (21) is limited by said bottom wall (14) of the container (1), by an opposed wall (31) and by a perimetral wall (24) extending between said bottom wall (14) and said opposed wall (31), and wherein said at least one opening (23) for connecting a respective fluid feeding duct (101) is formed in said opposed wall (31 ).

4. Disgregating device (100) according to any one of the preceding Claims, wherein said container (1) comprises a side wall (13) and said second fluid feeding means (16, 22, 25a-c) comprise:
- a plurality of holes (16) formed in said side wall (13), each hole of said plurality of holes (16) having a respective axis (X2-X2) inclined with an angle α<0 with respect to a transversal axis (Y-Y) of the container (1);
- a second distribution chamber (22) externally facing said side wall (13) and comprising at least an opening (25a-c) for connecting a respective fluid feeding duct (1 02a-c).

5. Disgregating device (100) according to Claim 4, wherein said second distribution chamber (22) annularly extends around said container (1) along a portion of the height of said container (1).

6. Disgregating device (100) according to Claim 5, wherein said second distribution chamber (22) is angularly divided in a plurality of sectors (22a-c) and an opening (25a-c) for connecting a respective fluid feeding duct (102a-c) is present in each sector.

7. Disgregating device (100) according to Claim 5 or 6, wherein said second distribution chamber (22) is limited by said side wall (13) of the container (1), by a wall (32) opposed to this latter in the direction of the longitudinal axis (X-X) and by at least a perimetral wall (26) extending between said side wall (13) of the container (1) and said opposed wall (32), and wherein said at least one opening (25a-c) for connecting a respective fluid feeding duct (102a-c) is formed in said opposed wall (32).

8. Disgregating device (100) according to any one of the preceding Claims, comprising a collecting plate (5) associated to said container (1) in correspondence to said summit region (12) and fluid-communicating with said container (1).

9. Process for disgregating samples of sediment of water depths comprising the steps of:
- putting a sediment sample in a funnel-shaped container (1) with a longitudinal axis (X-X), a base region (11) with cross-sectional relatively smaller areas and a summit region (12) with cross-sectional relatively larger areas;
- generating inside said container (1) at least a first fluid jet (G1) having a respective propagation direction substantially parallel to said longitudinal axis (X-X) and oriented from said base region (11) to said summit region (12) of the container (1);
- at least partially simultaneously to the generating step of said at least a first fluid jet (G1), generating inside said container (1) at least a second fluid jet (G2) having a respective propagation direction with at least a component (G2p) substantially parallel to said longitudinal axis (X-X) and oriented from said summit region (12) to said base region (11) of the container (1),
**characterized in that** said at least a second fluid jet (G2) is generated so that said at least a component (G2p), substantially parallel to the longitudinal axis (X-X), is transversally offset with respect the propagation direction of the at least a first fluid jet (G1).

10. Unit (300) for treating sediment samples of water depths comprising at least a disgregating device (100) according to one of Claims 1-8 and at least a screening device (200) in cascade fluid-communicating connection with the at least one disgregating device (100).
